(19) Europäisches Patentamt
European Patent Office
Office européen des brevets

(11) Publication number: 0 322 188 B1

(12) # EUROPEAN PATENT SPECIFICATION

(45) Date of publication of patent specification: **07.10.92**

(51) Int. Cl.5: **C09D 5/00**, C08F 220/34

(21) Application number: **88312058.6**

(22) Date of filing: **20.12.88**

(54) **Aqueous coating compositions.**

(30) Priority: **22.12.87 US 136677**

(43) Date of publication of application:
**28.06.89 Bulletin 89/26**

(45) Publication of the grant of the patent:
**07.10.92 Bulletin 92/41**

(84) Designated Contracting States:
**BE DE ES FR GB IT NL**

(56) References cited:
**BE-A- 649 380**
**DE-A- 2 143 682**
**FR-A- 2 181 889**
**US-A- 3 494 878**

(73) Proprietor: **ROHM AND HAAS COMPANY**
**Independence Mall West**
**Philadelphia Pennsylvania 19105(US)**

(72) Inventor: **Chou, Chuen-Shyoung,**
**1409, Glen Echo Lane**
**Dresher Pennsylvania 19025(US)**
Inventor: **Rheenen, Paul Van**
**190 Tally Ho Drive Warminster**
**Pennsylvania 18974(US)**

(74) Representative: **Tanner, James Percival et al**
**ROHM AND HAAS (UK) LTD. European Operations Patent Department Lennig House 2**
**Mason's Avenue**
**Croydon CR9 3NB(GB)**

**EP 0 322 188 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Technical Field

The invention relates to aqueous coating compositions containing anionic materials for forming films having superior water resistance.

Background Art

Protective and decorative coatings formed from aqueous coating compositions have become ubiquitous. Driven by the desire to replace organic solvent-based coating compositions, which often contain toxic materials, coating manufacturers have striven to achieve the generally superior performance of these solvent-based compositions with less hazardous water-based compositions. In doing so, they have encountered a host of problems. One source of difficulty is that films formed from water-based compositions are frequently exposed to water subsequent to film formation.

Exterior coatings must endure exposure to the elements; interior coatings become soiled and must be washed. This post-film formation exposure to water may swell a high molecular weight polymeric binder, or leach out low molecular weight water-soluble constituents of the film, or both. Loss of film integrity and discoloration may occur.

Among the most common water-sensitive low molecular weight constituents of aqueous coating compositions are anionic surfactants. Other anionic materials which are present include low molecular anions (e.g., chloride and sulfate) and moderate and high molecular weight anionic dispersants and thickeners.

When anionic surfactants are present in films formed by pigmented compositions (paints), they can reduce the water resistance properties such as blister resistance and water spot resistance. In unpigmented films (clear coatings), anionic surfactants contribute to water whitening. In general, the presence of anionic surfactants increase the water pickup and swelling of films formed by water-based compositions including a binder-forming polymer latex.

Low and moderate molecular weight anionic materials are typically employed in aqueous coating compositions containing anionically charged high polymer latexes. Anionic materials may be carried over from the polymerization of the latex, or they may be added during formulation of the composition. In either case, they tend to increase the water sensitivity of the film formed by the composition in which they are present. Minimizing the amount of anionic materials used in the preparation of aqueous coating compositions is a frequent expedient to reduce the water resistance of aqueous coatings. However, reducing the anionic material content may cause different problems, such as a concomitant reduction in the stability of the composition. Thus, the compromise may not be entirely satisfactory.

In addition, because aqueous coating and compositions typically contain many constituents, and the preparation of each constituent is not simply related to the performance of the resulting composition and the film which it forms, optimizing the amount of anionic material in the composition can be difficult and complex. While the optimization process may be susceptible to sophisticated statistical analysis and experimental design, many coating formulators, constrained by the need to prepare and stock a broad line of aqueous coating compositions to meet their customers' needs, are not able to optimize the level of anionic materials in their products. There are needs for both an alternative to the optimization process and for means of surpassing the performance achieved by mere optimization of existing formulations. The solution to the problem would provide coatings formulators with the opportunity to supply their customers with coating compositions which form films having low water sensitivity and the additional performance benefits associated therewith.

Anion exchange resins are well known and widely employed in the treatment of aqueous solutions including anionic materials. Application examples include the transformation of the anionic constituents of a solution, such as the conversion of a chloride to a hydroxide or free base; the fractionation of anionic species having different $K_b$s; the concentration of selected anionic species from dilute solution; and the use of such resins as catalysts. Anion ion exchange resins are generally available as highly crosslinked, water-insoluble yet hydrophilic, polymer beads prepared by suspension polymerization. An effective bead diameter of 0.4 - 0.6 mm is preferred for most ion-exchange applications. This size is orders of magnitude greater than the typical dimensions of the particulates employed in coatings applications where pigments are ground or milled to dimensions on the order of $10^{-5}$ -$10^{-3}$ cm, and latex particles are preferably small enough to be kept in suspension or easily resuspended on settling.

The Invention

The invention provides an aqueous coating composition comprising an anionic species-scavenging system including an aqueous dispersion of non-film forming water-insoluble, weak base-functional synthetic latex polymer particles, the particles being polymerized from monomer including ethylenically unsaturated monomer having a weak base-functional group, and a volatile base adapted to maintain the pH of the aqueous coating composition above the $pK_a$ of the weak base-functional group prior to and during the application of the composition.

The scavenging system preferably comprises two-stage latex particles. The first stage of these latex particles is preferably polymerized from monomer mixture which includes 2-(dimethylamino)ethyl methacrylate (which includes a tertiary amine as a weak base functional group). Alternatively, the weak base-functional synthetic particles can be polymerized in a single stage. In this case, the monomer mixture preferably also includes at least one monomer having a weak base functional group: 2-(t-butylamino)ethyl methacrylate being preferred.

An aqueous coating composition according to the invention can be applied by conventional techniques to a substance to be coated. Typically, a thin layer of the coating composition is applied, generally from 1 to 5 mil thick. As the wet composition dries, the polymer latex particles of the binder coalesce to form a continuous phase. The binder-forming latex particles are typically stabilized by, inter alia, anionic surfactant absorbed to the surface of the particles. After the composition has formed a film and dried, the anionic surfactant detracts from the performance of the film as a protective barrier in that it increases the water sensitivity of the coating.

The scavenging system is thought to work like this: As the applied coating composition including the anionic species scavenging system dries, it loses volatile base. The pH of the coating composition drops, so a significant fraction of the weak base sites in the weak base-functional polymeric particles become protonated. At this point in the drying process, the coating composition is still sufficiently fluid to permit anionic surfactant species to diffuse to the weak base to which it has become protonated. The protonated weak base and the anionic surfactant form liposalt-type ion pairs which are localized in the coating in a discontinuous phase made up of non-film forming latex polymer particles. As a result, little anionic surfactant is distributed in the continuous binder phase, and the water sensitivity of the dried films is low.

The weak base-functional polymer particles can be formed by free radical-induced polymerization of a corresponding ethylenically unsaturated monomer. More than one weak base-functional monomer species may be included. Alternatively, weak base-functional polymer particles can be prepared by first polymerizing monomer which does not include weak base-functional groups, and then functionalizing or chemically modifying the polymer to provide weak base-functionality.

The weak base-functional polymer particles are insoluble in water. That is, while they may initially include a water-soluble fraction which can be extracted by exposure to water or an aqueous solution, they consist substantially of water-insoluble material. The polymer particles are dispersible in aqueous media, and prefably codispersible with binder-forming synthetic polymer latex particles. The resulting aqueous dispersions should have good stability. The weak base-functional polymer particles can also contain ionic functional groups, such as carboxylate, sulfate or phosphate, to provide or improve the aqueous dispersibility as disclosed in U.S. Patent 3,637,565.

Alternatively, or in addition, dispersants can be employed to promote the dispersion of the weak base-functional polymer particles in the aqueous composition. Nonionic dispersants, such as polymeric dispersants and suspending agents are preferred, because anionic dispersants reduce the capacity of the weak base functional polymers to scavenge other anionic species.

The weak base-functional polymer particles comprise polymer which does not form a film or participate in film formation under the conditions which prevail when a coating composition including the particles is applied to a substrate. The non-film-forming character of the weak base functional particles can be achieved by selecting the monomer composition to provide a polymer having a glass transition temperature ($T_g$) so much greater than the ambient temperature at which the coating composition is applied that the polymer particles remain in a relatively rigid glass-like state at the application temperature. The prediction of glass transition temperatures based on monomer composition is well known. Preferably, the glass transition temperature of the weak base-functional polymer particles in the formulated coating composition, which can include a coalescing solvent, and the like, is at least 10 degrees Celsius greater than the application temperature for which the aqueous coating composition is intended.

Thus, the weak base-functional polymer particles preferably comprise a particulate additive akin to a pigment, rather than a component of the binder of the composition. Depending on the end use application intended for the composition, the average particle size of the weak base-functional polymer particles can

vary over a wide range. Preferably, the average particle size of the weak base-functional polymer particles is not substantially greater than the average particle size of the pigment particles. In unpigmented coatings, unless the average refractive index of the weak base-functional polymer particles closely approximates that of the binder, the average particle size of the weak base-functional polymer particles is preferably less than 300 nm, so that light scattering, and concomitant opacification of the coating by the weak base-functional polymer particles is avoided. In general, the average particle size of the weak base-functional polymer particles is selected so that the particles do not provide the coating with a grainy or irregular surface. Of course, in some coating applications, such "texture" coatings, an irregular or grainy surface is a desired attribute, and the particle size of the weak base-functional polymer particles can be adjusted accordingly.

Another important quality relating to the average particle size of the weak base-functional polymer particles is the diffusibility of anionic materials, and especially anionic surfactants, within the polymer particles. When a significant proportion of the weak base functional groups are contained within the interior of the particles, anionic materials must be able to diffuse into the polymer particles to form ion pairs with the interior weak base-functional groups. Because the anionic materials generally have moderate to relatively high molecular weights, they would generally not be expected to diffuse far into the center of large polymer particles, unless they have a special geometry, such as that of macroreticular ion exchange resin. Because as a rule the ratio of surface area to volume increases as particle size decreases, small particles will have a greater proportion of weak base functional groups at or within access distance to the particle surface than large particles (assuming a preparative technique that gives a uniform distribution of functional groups through the particle volume). Thus, polymer particles having small particles size are preferred. For example, weak base-functional polymer particles having an average particle size from 40 nm to 30 microns can be used, and those having an average particle size from 40 nm to 300 nm are preferred. Here "particle size" refers to the largest dimension of the particles.

The weak base-functional polymer particles can be prepared by additional polymerization of ethylenically unsaturated monomers. Conventional polymerization techniques, such as free radical polymerization, ionic polymerization, and group transfer polymerization can be used. Preferably, the preparative technique gives an aqueous dispersion of weak base-functional polymer particles without requiring an additional dispersion step. The aqueous dispersions can be prepared by suspension polymerization, interfacial polymerization or emulsion polymerization for example. However, emulsion polymerization is preferred, as the aqueous dispersion of latex polymer particles formed in this process can be used directly or with minimal workup in preparing compositions according to the present invention. For example, single and multiple shot batch processes of emulsion polymerization can be used, as well as continuous processes. If desired, a monomer mixture can be prepared and added gradually to the polymerization vessel. The monomer composition within the polymerization vessel can be varied during the course of the polymerization, for example by altering the composition of the monomer being fed into the polymerization vessel. Both single and multiple stage techniques can be used. The latex particles can be prepared using a seed polymer emulsion to control the number of particles produced; their particle size can be controlled by adjusting the initial surfactant charge.

A polymerization initiator can be used in the polymerization of the weak base-functional polymer particles. Examples of polymerization initiators which can be employed include those which decompose thermally at the polymerization temperature to generate free radicals. Examples include both water-soluble and water-insoluble species: persulfates, such as ammonium or alkali metal (potassium, sodium or lithium) persulfate; azo compounds such 2,2′-azo-bis(isobutyronitrile), 2,2′-azo-bis(2,4-dimethylvaleronitrile), and 1-t-butyl-azocyanocyclohexane; hydroperoxides such as t-butyl-hydroperoxide and cumene hydroperoxide; peroxides such as benzoyl peroxide, caprylyl peroxide, di-t-butyl peroxide, ethyl 3,3′-di(t-butylperoxy) butyrate, ethyl 3,3′-di(t-amylperoxy) butyrate, t-amylperoxy-2-ethyl hexanoate, and t-butylperoxy pivilate; peresters such as t-butyl peracetate, t-butyl perphthalate, and t-butyl perbenzoate; as well as percarbonates, such as di(1-cyano-1-methylethyl)-peroxy dicarbonate; and perphosphates.

Polymerization initiators can be used alone or as the oxidizing component of a redox system. As the reducing component, the system may contain ascorbic acid, malic acid, glycolic acid, oxalic acid, lactic acid, thiogycolic acid, an alkali metal sulfite, that is a hydrosulfite, hyposulfite or metabisulfite, such as sodium hydrosulfite, potassium hyposulfite or potassium metabisulfite, or sodium formaldehyde sulfoxylate, for example. The reducing component is frequently referred to as an accelerator.

The initiator and accelerator, commonly referred to as catalyst, catalyst system or redox system, can be used in a proportion of from 0.001% to 5% each, based on the weight of monomers to be copolymerized. Accelerators such as chloride and sulfite salts of cobalt, iron, nickel or copper can be used in small amounts. Examples of redox catalyst systems include tert-butyl hydroperoxide/sodium formaldehyde sulfoxylate/Fe(II), and ammonium persulfate/sodium bisulfite/sodium hydrosulfite/Fe(II). The polymerization

temperature can be from room temperature to 90 ° C for example depending on the catalyst system employed.

Chain transfer agents can be used to control polymer molecular weight; examples include mercaptans, polymercaptans and polyhalogen compounds more particularly alkyl mercaptans such as ethyl mercaptan, n-propyl mercaptan, n-butyl mercaptan, isobutyl mercaptan, t-butyl mercaptan, n-amyl mercaptan, isoamyl mercaptan, t-amyl mercaptan, n-hexyl mercaptan, cyclohexyl mercaptan, n-octyl mercaptan, n-decyl mercaptan, n-dodecyl mercaptan; alcohols such as isopropanol, isobutanol, lauryl alcohol and t-octyl alcohol; halogenated compounds such as carbon tetrachloride, tetrachloroethylene, and tricholorobromoethane. Generally up to 10% by weight, based on the weight of the monomer mixture, can be used. The polymer molecular weight can be controlled by selecting the ratio of initiator to monomer, for example.

Catalyst and/or chain transfer agent can be dissolved or dispersed in separate fluid media or the same fluid medium, and gradually added to the polymerization vessel. Monomer, either neat or dissolved or dispersed in a fluid medium, can be added simultaneously with the catalyst and/or the chain transfer agent. Amounts of initiator or catalyst can be added to the polymerization mixture to "chase" residual monomer after polymerization has been substantially completed to polymerize the residual monomer.

Aggregation of the latex polymer particles can be discouraged by inclusion of a micelle-forming, stabilizing surfactant in the polymerization mix. In general, the growing core particles are stabilized during emulsion polymerization by one or more surfactants such as an anionic or nonionic surfactant, or a mixture of two or more thereof. Many examples of surfactants suitable for emulsion polymerization are given in McCutchen's Detergents and Emulsifiers (MC Publishing Co., Glen Rock, NJ), published annually. Other types of stabilizing agents, such as protective colloids, can also be used.

Preferably, the proportion of anionic surfactant is minimized relative to the nonionic surfactant, so that addition of the aqueous dispersion including the weak base-functional latex polymer particles contributes minimal anionic surfactant to the coating composition.

Examples of suitable anionic surfactants include the ammonium, alkali metal, alkaline earth metal, and lower alkyl quaternary ammonium salts of: sulfosuccinates such as di ($C_7$-$C_{25}$) alkylsulfosuccinates and higher alkyl sulfosuccinates, such as octyl sulfosuccinate; sulfates such as the higher fatty alcohol sulfates, for example, lauryl sulfate; sulfonates including aryl sulfonates, alkyl sulfonates, and the alkylaryl sulfonates, for example, isopropylbenzene sulfonate, isopropylnaphthalene sulfonate and N-methyl-N-palmitoyltaurate, and isothionates such as oleyl isothionate. Additional examples include the alkylarylpoly(ethyleneoxy) ethylene sulfates, sulfonates and phosphates, such as t-octylphenoxypoly(ethyleneoxy)ethylene sulfates and nonylphenoxy-poly(ethyleneoxy)ethylene phosphates, either having from 1 to 7 oxyethylene units.

Examples of suitable nonionic surfactants include poly(oxyalkylene) alkylphenol ethers, poly-(oxyalkylene) alkyl ethers, poly(oxyalkylene) esters of fatty acids, and polyethyleneoxide-polypropyleneoxide block copolymers.

In emulsion polymerization, an aqueous polymerization medium is employed. The aqueous medium includes water and can include soluble inorganic salts, nonreactive water-miscible cosolvents such as lower alkanols and polyols, buffering agents, soluble and dispersible polymeric materials including protective colloids, and thickening and suspending agents such as polyvinyl alcohol, methoxycellulose, and hydroxyethylcellulose.

Examples of weak base-functional monomers which may be polymerized for use according to the invention include monoethylenically unsaturated monomers containing the group -HC = C- and a weak base amino group or radical, and polyethylenic amines which polymerize monoethylenically, such as weak base amine-substituted butatriene. The amino-functional monomer preferably comprises from 5 to 75 percent by weight of the total monomer, more preferably from 20 to 60 percent. The properties of basic monomers, including alkenyl pyridines and alkylaminic (meth)acrylates are reviewed by L.S. Luskin in Functional Monomers, Volume 2 (R.H. Yocum and E.B. Nyquist ed.s Marcel Dekker, Inc., New York 1974) at 555-739.

Examples of suitable amine-functional monoethylenically unsaturated monomers include:

Amine-functional, ethylenically unsaturated monomers:

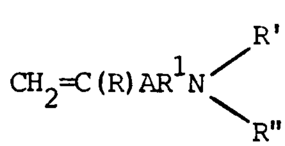

(I)

where:

R is H, $CH_3$, or $C_2H_5$;

A is -O-, -S-, $-CO_2$ -, or $-C(O)NR^2-$; in which $R^2$ is H or a saturated aliphatic hydrocarbyl group having from 1 to 12 carbon atoms,

$R^1$ is a straight or branched chain alkylene group having from 2 to 10 carbon atoms, of which at least two extend in a chain between the adjoined N atom and A group;

$R'$, when not directly connected to $R''$, is H, a hydroxyalkyl group containing from 2 to 4 carbon atoms, or a saturated aliphatic hydrocarbon group having from 1 to 10 carbons atoms,

$R''$, when not directly connected to $R'$, is H, a hydroxyalkyl group containing from 2 to 4 carbon atoms, or a saturated aliphatic hydrocarbon group having from 1 to 10 carbon atoms; and

$R'$ and $R''$, when directly connected together, form with the N atom a residue of morpholine, piperazine, pyridine, pyrrolidine, or a N-alkyl-piperazine in which the alkyl group has from 1 to 18 carbon atoms, such as methyl, ethyl, or isopropyl.

Amine-functional, ethylenically unsaturated monomers:

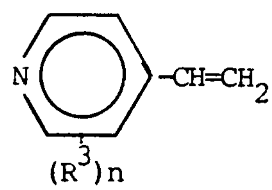

(II)

where:

$R^3$ is H or a saturated aliphatic hydrocarbon group having from 1 to 12 carbon atoms; and

n is an integer from 1 to 4.

Amine-functional ethylenically unsaturated monomers:

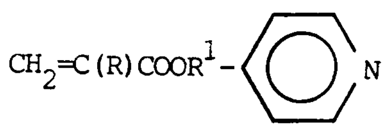

(III)

where R and $R^1$ are defined above.

Examples of the compounds of Formula I above include:

10-aminodecyl vinyl ether
8-aminooctyl vinyl ether
6-(diethylamino)-hexyl (meth)acrylate
2-(diethylamino)-ethyl vinyl ether
5-aminopentyl vinyl ether
3-aminopropyl vinyl ether
2-aminoethyl vinyl ether
2-aminobutyl vinyl ether
4-aminobutyl vinyl ether
3-(dimethylamino)-propyl (meth)acrylate
2-(dimethylamino)-ethyl vinyl ether
N-(3,5,5-trimethylhexyl)-aminoethyl vinyl ether
N-cyclohexylaminoethyl vinyl ether
3-(t-butylamino)propyl (meth)acrylate
2-(1,1,3,3-tetramethylbutylamino)-ethyl (meth)acrylate
N-t-butylaminoethyl vinyl ether
N-methylaminoethyl vinyl ether
N-2-ethylhexylaminoethyl vinyl ether
N-t-octylaminoethyl vinyl ether
beta-morpholinethyl (meth)acrylate
4-(beta-acryloxyethyl) pyridine

beta-pyrrolidinoethyl vinyl ether
5-aminopentyl vinyl sulfide,
beta-hydroxyethylaminoethyl vinyl ether,
(N-beta-hydroxyethyl-N-methyl)aminoethyl vinyl ether,
hydroxyethyldimethyl-(vinyloxyethyl) ammonium hydroxide
2-(dimethylamino)-ethyl (meth)acrylate,
2-(dimethylamino)-ethyl (meth)acrylamide
2-(t-butylamino)-ethyl (meth)acrylate,
3-(dimethylamino)-propyl (meth)acrylamide,
2-(diethylamino)-ethyl (meth)acrylate,
2-(dimethylamino)-ethyl (meth)acrylamide
Examples of monomers of Formula II above include:
4-vinyl pyridine
2,6-diethyl-4-vinyl pyridine
3-dodecyl-4-vinyl pyridine, and
2,3,5,6-tetramethyl-4-vinyl pyridine.
Examples of monomers of Formula III above include:
3-(4-pyridyl)propyl methacrylate,
2-(4-pyridyl)ethyl methacrylate, and
2-(4-pyridyl)ethyl acrylate.
2-(dimethylamino)-ethyl methacrylate and
2-(t-butylamino)-ethyl methacrylate are preferred.

"(Meth)acrylate" means both acrylic acid and methacrylic acid esters. Similarly, "(meth)acrylamide" embraces both the methacrylamides and acrylamides.

Preferably, the weak base of the weak base functional group has a $pK_a$ of from 4 to 7, as measured at the half neutralization point. The weak base should not be protonated at the pH of the aqueous coating composition. Aqueous coating compositions are frequently formulated at alkaline pH to stabilize anionically charged latex binders against agglomeration, for example. The principles of formulating aqueous coating compositions are reviewed, in Formulation of Organic Coatings (N.I. Gaynes ed. D. Van Nostrad Co., Inc. Princeton, NJ 1967) at pp. 189-230.

Ammonia is the volatile base which is preferred in the scavenging system of the invention. However, others such as morpholine, and alkyl amines can be used.

The weak base-functional monomer provides polymer particles which only form complexes or ion pairs with anionic materials when the pH of the coating film drops during the drying process as the volatile base is lost. Preferably, the $pK_a$ of the weak base functional monomer is such that complex formation is inhibited at the high pH of the compositions prior to application because the base is not protonated. In contrast, quaternized forms of weak base-functional monomers, such as weak-base monomers which are alkylated with benzyl chloride, are usually strong bases which form complexes with anionic materials even at high pH levels, and generally cannot be employed in the scavenging system of the invention.

The invention includes mixed aqueous compositions containing both weak base-functional polymer particles and binder-forming polymer latex particles. Often the binder-forming latex polymer particles contain carboxyl functional groups. Under suitable conditions, the carboxyl groups are ionized and the resultant charges on the latex particle surface electrostatically stabilize the latex against premature agglomeration. Often a volatile base, is used to adjust the pH of the composition. When the compositions is applied to a substrate, the volatile base is lost and the pH of the composition drops, destabilizing the latex particles of the binder and thus encouraging agglomeration to form a continuous binder film. When weak base-functional latex particles are included in such compositions, the weak base becomes protonated as the pH drops when the volatile base is lost. Subsequently, anionic species such as anionic surfactant are believed to diffuse to and to form ion pairs with the protonated weak base.

In addition to the weak base-functional monomer, other ethylenically unsaturated monomers which are copolymerizable therewith can be used in preparing the polymer particles. Examples of nonionic monoethylenically unsaturated comonomers which can be used include styrene, alpha-methyl styrene, vinyl toluene, vinyl naphthalene, ethylene, vinyl acetate, vinyl versatate, vinyl chloride, vinylidene chloride, acrylonitrile, methacrylonitrile, (meth)acrylamide, various ($C_1$-$C_{20}$)alkyl and ($C_3$-$C_{20}$)alkenyl esters of (meth)-acrylic acid; for example, methyl (meth)acrylate, ethyl (meth)acrylate, n-butyl (meth)acrylate, isobutyl (meth)acrylate, 2-ethylhexyl (meth)acrylate, cyclohexyl (meth)acrylate, n-octyl (meth)acrylate, n-decyl (meth)acrylate, n-dodecyl (meth)acrylate, tetradecyl (meth)acrylate, n-amyl (meth)acrylate, neopentyl (meth)acrylate, cyclopentyl (meth)acrylate, lauryl (meth)acrylate, oleyl (meth)acrylate, palmityl (meth)-

acrylate, and stearyl (meth)acrylate; other (meth)acrylates such as isobornyl (meth)acrylate, benzyl (meth)-acrylate, phenyl (meth)acrylate, 2-bromoethyl (meth)acrylate, 2-phenylethyl (meth)acrylate, and 1-naphthyl (meth)acrylate; alkoxyalkyl (meth)acrylate such as ethoxyethyl (meth)acrylate; and dialkyl esters of ethylenically unsaturated di- and tricarboxylic acids and anhydrides, such as ethyl maleate, dimethyl fumarate, trimethyl aconitate, and ethyl methyl itaconate.

The ethylenically unsaturated comonomer can serve to raise the average molecular weight and to crosslink the polymer. Examples of multi-ethylenically unsaturated comonomers which can be used include allyl (meth)acrylate, tripropyleneglycol di(meth)acrylate, diethyleneglycol di(meth)acrylate, ethyleneglycol di-(meth)acrylate, 1,6-hexanediol di(meth)acrylate, 1,3-butyleneglycol di(meth)acrylate, polyalkylene glycol di-(meth)acrylate, diallyl phthalate, trimethylolpropane tri(meth)acrylate, divinyl benzene, divinyl toluene, trivinyl benzene and divinyl naphthalene. Comonomers including functional groups which can serve as sites for post-polymerization crosslinking can be included in lieu of or in addition to multi-ethylenically unsaturated comonomers. For example, epoxy-functional ethylenically unsaturated comonomers, such as glycidyl methacrylate, amine-functional ethylenically unsaturated comonomers such as methyl acrylamidoglycolate methyl ether can be employed. The copolymerization conditions should be selected to minimize any reaction between the weak base-functional group and the post-polymerization crosslinkable functional group. After polymerization an appropriate multi-functional crosslinking agent can be reacted with crosslinkable functional groups pendent from the polymer chain. Alternatively, the weak base functional group itself can serve as crosslinking site. Other suitable means of crosslinking include the use of high energy particles and radiation.

The weak base-functional polymer particles can be prepared by functionalization of polymers which do not include weak base-functional groups. The functionalization can be effected on (meth)acrylate ester polymers by transesterifying or amidating at least a portion of the ester residues with an alkanolamine or diamine.

Weak base-functional latex polymer particles are preferably polymerized in a single stage from a monomer mixture which includes 2-(t-butylamino)-ethyl methacrylate ("TBAEMA"). Surprisingly, the single stage latex exhibits substantially greater stability in blends with binder-forming polymer latex particles than a similar material prepared using another commonly available weak base-functional ethylenically unsaturated monomer, 2-(dimethylamino)-ethyl methacrylate ("DMAEMA"). It is preferred that the monomer include from 5 to 75, more preferably from 20 to 60, percent by weight of TBAEMA. DMAEMA is generally a less expensive specialty monomer than TBAEMA.

The presence of DMAEMA at the surface of the latex particles appears to be associated with a reduction in the colloidal stability of blends of weak base-functional polymer particles and binder-forming latex particles. The stability problem can be alleviated or avoided by a multi-stage polymerization technique. DMAEMA is included in an initial stage and excluded from the second and final stage. The first stage preferably includes from 5 to 75 percent by weight DMAEMA. A non-functional monomer such as styrene can be copolymerized with the DMAEMA in the first stage. A first stage monomer composition of about one-to-one styrene to DMAEMA on a weight basis in especially preferred. The second stage can optionally include TBAEMA. However, styrene is preferred for use also as the second stage monomer. Very good colloidal blend stability can be achieved using a 5% w/w styrene second stage over a crosslinked DMAEMA first-stage. Divinyl benzene is preferably used in both the first and second stages as a crosslinking agent. Surprisingly, the styrene second stage does not inhibit the ability of the weak base-functional polymer latex particles to improve water resistance properties. For example, when used in deep tone paints, weak base-functional polymer particles having first stage DMAEMA and second stage styrene improve water spot resistance. Stability is best when the styrene second stage is crosslinked, such as with 5% w/w divinyl benzene (55% w/w active).

An important process variable in preparing such weak base-functional latex particles is the hold time between the polymerization of the first stage including DMAEMA and the polymerization of the second stage including styrene. No problem is apparent when the interval between completion of the addition of the first stage monomer and the beginning of the addition of the second stage monomer is sufficiently long. For example, twenty minutes in a laboratory scale (4 liters) preparation is adequate. However, when the weak base-functional polymer particles are prepared by a process using a short hold time, for example, 5 to 10 minutes for a laboratory scale preparation, blend stability problems result. It appears that the hold time is necessary to "chase down" (i.e., polymerize) any residual DMAEMA and avoid contamination of the second stage with DMAEMA.

When styrene/divinyl benzene is used in the second stage, the second stage can include from 5% to 50% by weight of the total monomer. However, it is important to avoid forming an integral impenetrable shell, such as a styrene shell, around a weak base-functional core, as may occur when an excessive

proportion of styrene is used. If an integral shell is formed, anionic species such as anionic surfactants cannot form ion pairs with the weak base functional group, and the anion scavenging utility of the weak base-functional polymer particles is lost.

When TBAEMA is used in the second stage and DMAEMA is used in the first stage, blend stability becomes marginal at a first stage to second stage weight ratio of about 9 to 1.

In general, it is desirable to maximize the capacity of the weak base-functional polymer particles to form ion pairs with anionic materials. Often this can be accomplished by adopting a preparative technique and selecting monomers to provide particles which have as much surface area as possible accessible to anionic species. In the case of macroreticular ion exchange resins, this is accomplished by providing a plurality of interconnecting channels or pores through the otherwise spherical beads or pearls. As noted above, another way to achieve high accessibility is to prepare relatively small particles. In addition, in general it is desirable that the particles swell by some optimal amount to enhance the accessibility of the weak base functional groups to anionic materials. The degree of swelling can be controlled by varying the extent of crosslinking. Crosslinking also serves to reduce the tendency of the polymer chains to participate in film formation. Preferably, the extent of crosslinking is adapted to provide particle integrity without unduly inhibiting swelling.

For weak base-functional polymer particles having a first stage monomer composition of 45% by weight styrene, 50% by weight DMAEMA, and 5% by weight divinyl benzene (55% active) (i.e., 50 DMAEMA/44 Sty/5 DVB) and a second stage monomer composition of 95% by weight styrene and 5% divinyl benzene (55% active) (i.e., 95 Sty/5 DVB), the weight ratio of first to second stages being 95 to 5, almost all the DMAEMA is available for complex formation with anionic materials, depending on the pH of the medium.

In general, from 85% to 90% of the weak base-functional groups of the preferred polymer particles can be titrated with HCl. This suggests that the only way in which capacity can be increased is by using the weak base-functional polymerizable ethylenically unsaturated monomer having the lowest available molecular weight to increase the ratio of weak base equivalents to polymer particle weight. On this basis DMAEMA is favored over TBAEMA because DMAEMA has a lower molecular weight than TBAEMA.

Surprisingly, in these embodiments, the accessibility of anionic surfactants to the weak base functional groups does not appear to be affected by distributing the weak base proximate the particle surface instead of uniformly through the volume of the particles. If polymer particles are prepared having an inert styrene core covered with a shell including weak base-functionality, no benefit is apparent in comparison with particles including weak base-functionality throughout. For example, if polymer particles having a nonfunctional core consisting of styrene and a functional shell including DMAEMA, the weight ratio of core to shell being one-to-one, are substituted for DMAEMA particles having the same concentration of DMAEMA throughout as does the shell of the particles with the nonfunctional core, the ability of the weak base-functional particles to improve water resistance is found to decrease by about 50% when the particles are used at equal weight levels in coating compositions. Varying the particle size of DMAEMA-functional polymer particles from 70 nm to 160 nm produces no change in end use properties of the coating compositions when the particles are used at the same weight level in coating compositions. This result suggests that all of the DMAEMA is important, not just DMAEMA near the surface of the particle, contrary to expectation.

The weak base-functional polymer particles can be used in a number of different coating compositions. They are especially useful in compositions based on aqueous dispersoins of anionic surfactant-stabilized synthetic latex polymer. Such coating compositions include exterior and interior paints, paper coatings, caulking materials, adhesives, binders for non-woven products such as disposable diapers, disposable wipes, facial tissues, binders for aqueous floor polish compositions and aqueous printing inks. The compositions can also include plasticizers and/or cosolvents, to reduce the minimum film formation temperature ("MFT") to less than the application temperature.

In contrast to the binder-forming latex polymer, the weak base-functional polymer particles do not participate in film formation. If the monomer composition of the weak base-functional polymeric particles leads to a material which does participate in the film formation, the resulting system is ineffective in scavenging anionic material.

The scavenging system is particularly useful in water based coating compositions formulated using an aqueous dispersion of a binder-forming synthetic polymer latex having a bimodal distribution of particle sizes, in that such dispersions frequently include anionic surfactants to enhance stability. Examples of bimodal synthetic polymer latex systems are given, for example, in U.S. Patents 4,254,004, 4,456,726, 4,567,099, and 4,657,966.

The weak base-functional polymer particles can be conveniently included in aqueous dispersions of synthetic polymer latexes adapted for use as binders of aqueous compositions. The resulting mixed

aqueous dispersions can be later used in formulation aqueous coating compositions. Aqueous dispersions of synthetic polymer latexes intended for use as binders in coating compositions are typically maintained at alkaline pH because the binder-forming synthetic polymer latex frequently includes carboxylate functionality to stabilize the latex against agglomeration. Ammonia is frequently used to adjust the pH of the polymeric latex binder upward in this case. However, when a coating composition is prepared using the mixture of weak base-functional polymer particles and binder-forming polymer latex particles, addition of a volatile base will typically be required to obtain an effective anionic material scavenging system because the polymer latex mixture will typically be substantially diluted with water and/or other solvents during the preparation of the coating composition. When weak base-functional polymer particles are mixed with binder-forming polymer latex particles to provide a mixed aqueous dispersion, suspending and/or dispersing agents can be included to stabilize the mixture against separation and to promote stability. Frequently, no special additional suspension and/or dispersion agents will be required, as the material included to stabilize the binder-forming polymer latex particles will be sufficient to stabilize the mixture of the weak base-functional polymer particles and the binder-forming polymer latex particles.

Examples of suspending and/or dispersing agents which can be used to suspend or disperse the weak-base-functional polymeric particles include natural polymeric materials such as naturally occurring gums; cellulose derivatives such as microcrystalline cellulose, hydroxyethyl cellulose, and methoxy cellulose; and synthetic polyelectrolytes such as polyacrylic acid, polymethacrylic acid.

When the weak base-functional polymeric particles are employed in typical aqueous coating compositions based on film-forming polymeric latex particles, it is preferred that the weight ratio of weak base-functional polymer particles to binder-forming polymer latex particles be from 1% to 10%. It is especially preferred that this ratio be about 5%. However, the proportion of weak base-functional polymer particles is in general preferably optimized to scavenge as much anionic material as possible, and this, of course, will depend on the total amount of scavengable anionic material in the aqueous coating composition.

When used in aqueous coating compositions including aqueous dispersions of binder-forming synthetic polymer latex prepared from acrylic monomer, the scavenging system provides a number of benefits associated with enhanced resistance to water sensitivity. For example, aqueous coating compositions exhibit reduced early blistering over acrylic chalk surfaces. The water whitening resistance of clear coatings formulated using such materials is often improved. Further, the hiding of coating compositions including these materials is often improved. When the scavenging system is used in formulating aqueous primer compositions, the stain-blocking resistance of the primer applied over woods like cedar and redwood is improved.

The scavenging system is most effective in aqueous coating compositions in which the amounts of nonionic surfactant and related polyethoxylated thickeners, and rheology modifiers are minimized. While addition of such materials does not destroy the ability of weak base-functional particles to improve water resistance properties, such materials are known to have at times a deleterious effect on coating water resistance properties, and the weak base-functional particles are not known to form complexes with such materials.

Thus, it is best to avoid using predispersed colorants for tinting aqueous coatings compositions such as interior latex paints if improved water resistance is to be achieved by use of such a scavenging system. Predispersed colorants typically include a substantial portion of nonionic surfactant which appears substantially to reduce the benefits associated with improved water resistance, such as water spot resistance, of aqueous coating compositions according to the invention. For example, when aqueous coating compositions are tinted with one ounce per gallon of phthalo blue, phthalo green or yellow iron oxide predispersed colorant, only small improvements are seen in water spot resistance when the aqueous coating composition includes 5% by weight of weak base-functional polymeric particles.

Another water resistance property which the scavenging system improves is early blister resistance over chalking, repainted surfaces. For example, when as little as 1% by weight weak base-functional polymeric latex is included in an aqueous exterior flat paint composition, the early blister resistance of the paint over chalky, acrylic-coated surfaces is improved.

Another coating property which can be improved by including the scavenging system in aqueous coating compositions is hiding. Typically, when weak base-functional polymer particles are included in certain aqueous coating compositions, the hiding as measured by the light-scattering coefficient of the film formed by the coating composition increases by from 7 to 12%. However, this increase in hiding is accompanied by a reduction in gloss. Improvement in hiding is unexpected and does not appear to be related to the improved water resistance. Coating compositions examined by optical and electron microscopy appear to show superior pigment dispersion when weak base-functional polymeric particles are included. It is hypothesized that the presence of the weak base-functional polymeric particles increases the

hiding ability of the paints by lowering the ionic strength of the paint by deionization.

When preparing aqueous coating compositions according to the invention, it is important to maintain the pH so high that coagulation of the weak base-functional polymer particles, the binder-forming synthetic polymer latex particles, and the pigment does not occur. As the pH of the composition including the weak base-functional polymer particles is decreased during paint preparation, for example by dilution through addition of water and/or cosolvent, the fraction of weak base in the weak base-functional polymer particles that is protonated increases. As the protonated fraction increases, the positive surface charge on the weak base-functional polymer particles increases, and at some point coagulation with the anionically charged binder particles and pigment will occur. When the secondary amine-functional (that is, TBAEMA) polymer particles or tertiary amine-functional (that is, DMAEMA) polymer particles are employed, coagulation begins to occur at a pH of about 8.5. For this reason the pH during paint production should not drop below about 8.5 and is preferably maintained at 8.8 or above. As long as the pH is maintained at a sufficiently high level, the coating compositions show satisfactory stability, including room temperature, heat age, roller, and freeze-thaw stability.

In addition to binder-forming polymer latex particles and weak base-functional polymer particles, the aqueous coating compositions of the invention can include typical coatings ingredients. For example, they can include light-reflecting pigments such as rutile and anatase titanium dioxide; extender pigments such as calcium carbonate, clays, magnesium silicates, aluminum silicates, mica, amorphous silica, and diatomaceous silica; defoamers; biocidal agents such as zinc ozide, 2-N-octyl-4-isothiazole-3-one, and phenyl mercuric acetate; coalescing agents such as diethylene glycol monoethyl ether acetate and ethylene glycol monobutyl ether acetate; plasticizers such as dialkyl phthalates including dibutyl phthalate and dioctyl phthalate; freeze-thaw stabilizers such as ethylene glycol, propylene glycol and diethylene glycol; nonionic wetting agents such as polyethylenoxylates of fatty acids, alkanols, alkylphenols, and glycols; pigment dispersants such as complex phosphates; and other anionic materials and species (these are preferably minimized, however); thickeners such as polyelectrolyte and cellulosic thickeners; rheology control agents such as associative thickeners; colorants such as colored pigments and dyes; perfumes; and cosolvents.

The following Examples as a whole illustrate the invention, although the earlier Examples described only the preparation of ingredients for the compositions of the invention.

EXAMPLE 1

PREPARATION OF TWO STAGE PARTICLES

A 5-liter round-bottomed flask is equipped with a paddle stirrer, thermometer, nitrogen inlet and reflux condenser. Deionized water (1200 g) is stirred in the flask at 60 °C under a nitrogen atmosphere. A first stage monomer mixture is prepared by mixing 450 g of deionized water, 76.5 g of Triton (trademark of Rohm and Haas Company) X-405 (70% active), 405 g of styrene, 45 g of divinylbenzene (DVB, 55% active), and 450 g of 2-(dimethylamino)ethyl methacrylate (DMAEMA). A second stage monomer mixture is prepared by mixing 450 g of deionized water, 8.5 g of Triton X-405, 95 g of styrene, and 5 g of divinylbenzene. A 25 g portion of the first stage monomer mixture is pumped into the flask. Two minutes thereafter, a mixture of 0.3 g of 70% active t-butylperoxide (TBHP), 20 ml of 0.1% aqueous $FeSO_4.10H_2O$, 12.5 ml of 1% aqueous ethylene diamine tetraacetic acid tetra sodium salt (trihydrate) and 0.3 g of sodium sulfoxylate formaldehyde (SSF), dissolved in 20 ml of deionized water and added to the flask. After 10 minutes, addition of the first stage monomer mixture to the flask is begun at a rate of 14 g/min along with a solution of 5.5 g of TBHP (70% active) dissolved in 250 g of water, and a solution of 3.8 g of SSF dissolved in 250 g of water, at a rate of 2 ml/min, maintaining the temperature at 55 °C. After 100 minutes the addition of first stage monomers is complete, and the second stage monomer mixture is then pumped into the flask at the same rate. After 12 minutes the addition of second stage monomer is complete. A mixture of 5 g water, 1.2 g Triton X-405, and 5.5 g of DVB is added to the flask. After 10 minutes addition of the SSF and the TBHP solutions is complete. After 10 minutes a solution of 0.36 g of TBHP and 0.15 g of SSF dissolved in 2.5 ml of water is added. After 20 minutes a solution of 1.0 g of TBHP and 0.5 g of SSF dissolved in 10 ml of water is added. After 20 minutes another solution of 1.0 g of TBHP and 0.5 g of SSF dissolved in 10 ml of water is added. After another 20 minutes, the dispersion is cooled to room temperature and filtered through a 100 mesh screen to remove any wet coagulum. The resulting dispersion has 27.7% solids, pH 9.1, Brookfield LVT viscosity 40 cps (spindle #3, 60 rpm ("3/60")), and particle size of 164 nm by Coulter Nanosizer. The resulting polymer has a monomer weight composition of 50% Sty/5% DVB/45% DMAEMA.

EXAMPLE 2

The procedure of Example 1 is repeated using similar aqueous dispersion to prepare a copolymer having the same monomer composition but an increased level of Triton X-405 is used. In the first stage monomer mixture the level of Triton X-405 is raised to 153 g, and the level of Triton X-405 in the second stage monomer mixture is raised to 17 g. The resulting polymer dispersion has 28.0% solids, pH 9.0, Brookfield LVT viscosity 30 cps (3/60), and particle size 110 nm.

EXAMPLE 3

The procedure of Example 2 is repeated to prepare a similar aqueous dispersion of a copolymer having the same monomer composition, but 42.5 g of Triton X-405 is added to the flask prior to the induction of polymerization. The resulting dispersion has 30.2% solids, pH 9.0, Brookfield LVT viscosity 50 cps (3/60), and particle size of 63 nm.

EXAMPLE 4 - 14

The procedure of Example 3 is repeated but using different monomer compositions as shown in Table I. The characteristics of the resulting dispersion are also shown in Table I.

TABLE 1

| Example | 4 | 5 | 6 | 7 | 8 | 9 | 10 | 11 | 12 | 13 | 14 |
|---|---|---|---|---|---|---|---|---|---|---|---|
| **Monomer Composition** | | | | | | | | | | | |
| Stage I | | | | | | | | | | | |
| water | 450 | 450 | 450 | 450 | 475 | 475 | 375 | 125 | 167 | 250 | 333 |
| Triton X-405 | 153 | 153 | 1536 | 1563 | 153 | 161.5 | 127.5 | 42.5 | 56.7 | 85 | 113 |
| styrene | 405 | 405 | 360 | 360 | 360 | 427.5 | 337.5 | 113 | 150 | 225 | 300 |
| DMAEMA | 450 | 450 | 450 | 450 | 450 | 475 | 375 | 125 | 167 | 250 | 333 |
| DVB | 45 | 45 | 90 | 90 | 90 | 47.5 | 37.5 | 12.5 | 16.6 | 25 | 33.3 |
| Stage II | | | | | | | | | | | |
| water | 50 | 50 | 50 | 50 | 50 | 25 | 125 | 375 | 333 | 250 | 167 |
| Triton X-405 | 17 | 17 | 17 | 17 | 17 | 8.5 | 42.5 | 127.5 | 133.3 | 85 | 57 |
| styrene | 98 | 100 | 90 | 95 | 98 | 47.5 | 237.5 | 712 | 633 | 475 | 316 |
| DVB | 2 | -- | 10 | 5 | 2 | 2.5 | 12.5 | 37.5 | 33.3 | 25 | 16.6 |
| **Polymer Dispersion Characteristics** | | | | | | | | | | | |
| % Solids | 30.2 | 30.4 | 30.7 | 30.4 | 29.7 | 29.7 | 27.1 | 31.9 | 31.8 | 31.8 | 31.8 |
| Particle Size (nm) | 70 | 69 | 63 | 64 | 65 | 70 | 60 | 80 | 70 | 62 | 63 |
| Viscosity (cps) | 50 | 50 | 50 | 50 | 40 | 50 | 40 | 50 | 50 | 50 | 50 |
| pH | 9.1 | 9.1 | 9.1 | 9.1 | 9.1 | 9.1 | 9.0 | 8.6 | 8.7 | 8.7 | 8.7 |

EXAMPLE 15

A 5-liter round-bottomed flask is equipped with a paddle stirrer, thermometer, nitrogen inlet and reflux condenser. Deionized water (1260 g) is stirred in the flask at 60 °C under a nitrogen atmosphere. A monomer mixture is prepared by mixing 500 g of deionized water, 170 g of Triton X-405 (70% active), 450 g of styrene, 50 g of divinylbenzene (DVB, 55% active), and 500 g of 2-(dimethylamino)ethyl methacrylate

(DMAEMA). 42.5 g of Triton X-405 is added to the flask prior to the induction of polymerization. A 25 g portion of the monomer mixture is pumped into the flask. Two minutes thereafter, a mixture of 0.3 g of 70% active t-butylperoxide (TBHP), 30 ml of 0.1% aqueous $FeSO_4.10H_2O$, 12.5 ml of 1% aqueous ethylenediamine tetraacetic acid tetra sodium salt (trihydrate), and 0.3 g of sodium sulfoxylate formaldehyde (SSF), dissolved in 20 ml of deionized water, is added to the flask. After 10 minutes, addition of the monomer mixture to the flask is begun at a rate of 14 g/minutes along with a solution of 5.5 g of TBHP (70% active) dissolved in 250 g of water, and a solution of 3.8 g of SSF dissolved in 250 g of water, at a rate of 2 ml/minutes, maintaining the temperature at 55°C. After 110 minutes the addition of monomer is complete. A mixture of 5 g water, 1.2 g Triton X-405, and 5.5 g of DVB is added to kettle. After 10 minutes addition of the SSF and the TBHP solutions is complete. After 10 minutes a solution of 0.36 g of TBHP and 0.15 g of SSF dissolved in 2.5 ml of water is added. After 20 minutes a solution of 1.0 g of TBHP and 0.5 g of SSF dissolved in 10 ml of water is added. After another 20 minutes, the dispersion is cooled to room temperature and filtered through a 100 mesh screen to remove any wet coagulum. The resulting dispersion has 31.5% solids, pH 9.1, Brookfield LVT viscosity 20 cps (3/60), and particle size of 75 nm by Coulter Nanosizer.

EXAMPLES 16 - 28

The procedure of Example 15 is repeated except that the monomer compositions are modified as shown in Table II, which also includes the pH, percent solids and particle size of the resulting dispersion.

Table II

| Example | 16 | 17 | 18 | 19 | 20 | 21 | 22 | 23 | 24 | 25 | 26 | 27 | 28 |
|---|---|---|---|---|---|---|---|---|---|---|---|---|---|
| Monomer Composition[7] | | | | | | | | | | | | | |
| styrene | 590 | 500 | 450 | 200 | -- | 450 | 480 | 350 | 950 | 750 | -- | 500 | -- |
| MMA[1] | -- | -- | -- | -- | 230 | -- | -- | -- | -- | -- | 230 | 115 | 480 |
| BA[2] | -- | -- | -- | -- | -- | -- | -- | -- | -- | -- | 250 | 125 | -- |
| DMAPMA[3] | -- | -- | -- | -- | -- | -- | -- | -- | -- | 200 | -- | -- | -- |
| DMAEMA | 500 | -- | -- | -- | -- | -- | -- | 100 | -- | -- | -- | -- | -- |
| TBAEMA[4] | -- | 500 | 500 | 750 | 750 | -- | -- | 500 | -- | -- | 500 | 250 | 500 |
| OXEMA[5] | -- | -- | -- | -- | -- | 500 | 500 | -- | -- | -- | -- | -- | -- |
| DVB | -- | -- | 50 | 50 | -- | 50 | -- | 50 | 50 | 50 | -- | -- | -- |
| ALMA[6] | 10 | -- | -- | -- | 20 | -- | 20 | -- | -- | -- | 20 | 10 | 20 |
| Polymer Dispersion Characteristics | | | | | | | | | | | | | |
| % Solids | 30.7 | 30.8 | 30.3 | 29.5 | 29.7 | 31.7 | 30.8 | 30.6 | 31.1 | 30.43 | 31.3 | 31.7 | 29.8 |
| particle size (nm) | 70 | 65 | 68 | 60 | 80 | 64 | 61 | 70 | 70 | 81 | 80 | 64 | 72 |
| pH | 9.1 | 9.7 | 9.8 | 9.7 | 9.9 | 8.3 | 8.3 | 9.8 | 7.5 | 11 | 9.9 | 9.6 | 9.7 |

1 MMA - methyl methacrylate
2 BA - butyl acrylate
3 DMAPMA - 2(dimethylaminopropyl) methacrylamide
4 TBAEMA - 2(t-butylaminoethyl) methacrylate
5 OXEMA - oxazolidinylethyl methacrylate
6 ALMA - allyl methacrylate
7 amount by weight

EXAMPLE 29

A 5-liter round-bottomed flask is equipped with a paddle stirrer, thermometer, nitrogen inlet and reflux condenser. Deionized water (1200 g) is stirred in the flask at 60 °C under a nitrogen atmosphere. A first stage monomer mixture is prepared by mixing 350 g of deionized water, 119 g of Triton X-405 (70%

active), 315 g of styrene, 35 g of divinylbenzene (DVB, 55% active), and 350 g of 2-(dimethylamino)ethyl methacrylate (DMAEMA). A second stage monomer mixture is prepared by mixing 150 g of deionized water, 51 g of Triton X-405, 135 g of styrene, 15 g of divinylbenzene, and 150 g of 2-(t-butylamino)ethyl methacrylate (TBAEMA). 42.5 g of Triton X-405 is charged to the flask prior to the induction of polymerization. A 25 g portion of the first stage monomer mixture is then pumped into the flask. Two minutes thereafter, a mixture of 0.3 g of 70% active t-butylperoxide (TBHP), 20 ml of 0.1% aqueous $FeSO_4.10H_2O$, 12.5 ml of 1% aqueous ethylenediamine tetraacetic acid tetra sodium salt (trihydrate) and 0.3 g of sodium sulfoxylate formaldehyde (SSF), dissolved in 20 ml of deionized water, is added to the flask. After 10 minutes, addition of the first stage monomer mixture to the flask is begun at a rate of 14 g/minutes along with a solution of 5.5 g of TBHP (70% active) dissolved in 250 g of water and a solution of 3.8 g of SSF dissolved in 250 g of water, at a rate of 2 ml/min, maintaining the temperature at 55 °C. After 100 minutes the addition of first stage monomer is complete, and the second stage monomer mixture is then pumped into the flask at the same rate. After 12 minutes the addition of second stage monomer is complete. A mixture of 5 g water, 1.2 g Triton X-405, and 5.5 g of DVB is then added to the flask. After 10 minutes the addition of the SSF and the TBHP solutions is complete. After 10 minutes a solution of 0.36 g of TBHP and 0.15 g of SSF dissolved in 2.5 ml of water is added. After 20 minutes a solution of 1.0 g of TBHP and 0.5 g of SSF dissolved in 10 ml of water is added. After 20 minutes another solution of 1.0 g of TBHP and 0.5 g of SSF dissolved in 10 ml of water is added. After another 20 minutes, the dispersion is cooled to room temperature and filtered through a 100 mesh screen to remove any wet coagulum. The resulting dispersion has 29.7% solids, pH 9.4, Brookfield LVT viscosity 40 cps (3/60), and particle size of 64 nm by Coulter Nanosizer.

Examples 30 - 34

The same procedure as Example 29 is repeated to prepare similar aqueous dispersions except the monomer composition is modified as shown in Table III. The characteristics of the resulting dispersions are also given in Table III.

Table III

| Example | 30 | 31 | 32 | 33 | 34 |
| --- | --- | --- | --- | --- | --- |
| | Monomer Composition[1] | | | | |
| | Stage I | | | | |
| styrene | 288 | 225 | 240 | 405 | 427.5 |
| DMAEMA | 300 | 250 | 250 | 450 | 475 |
| DVB | -- | 25 | -- | 45 | 47.5 |
| ALMA | 12 | -- | 10 | -- | -- |
| | Stage II | | | | |
| styrene | 192 | 225 | 240 | 45 | 22.5 |
| TBAEMA | 200 | 250 | 250 | 50 | 25 |
| DMAEMA | -- | -- | -- | -- | -- |
| DVB | -- | 25 | -- | 5 | 2.5 |
| ALMA | 8 | -- | 12 | -- | -- |
| | Polymer Dispersion Characteristics | | | | |
| % Solids | 30.6 | 30.0 | 29.9 | 29.7 | 30.3 |
| pH | 9.4 | 9.5 | 9.5 | 9.1 | 9.1 |
| Particle size (nm) | 63 | 70 | 62 | 66 | 62 |

[1] amount by weight

Example 35

Water based paints were made by mixing the materials in the amounts shown below. The grind

ingredients were mixed and ground by a Cowles dissolver at 3800-4500 feet/min. (f.p.m. peripheral speed) for 15 minutes, then letdown with the letdown ingredients at low speed. (1 foot = 0.3084 metres)

| Grind Ingredients | Amount by weight |
|---|---|
| water | 98.76 |
| Tamol 165 (dispersant)[1] | 12.19 |
| ammonium hydroxide (28%) | 1.70 |
| ethylene glycol | 28.75 |
| Nopco NXZ (defoamer)[2] | 6.25 |
| Dowicil 20%/water (biocide)[3] | 1.70 |
| Mapico 422 (iron oxide)[4] | 120.85 |
| Silica 1160[5] | 231.28 |
| Attagel 50[6] | 4.38 |
| **Letdown Ingredients** | |
| anionic film forming aqueous dispersion (52% solids) containing anionic, aromatic type surfactant. | 349.80 |
| Nopco NXZ[2] | 0.64 |
| Texanol[7] | 9.16 |
| ammonium hydroxide (28%) | 4.00 |
| water | 224.12 |
| QR-708 (thickener)[8] | 4.20 |
| | 1097.96 |

1 "Tamol" is a trademark of Rohm and Haas Company.

2 "Nopco" is a trademark of Diamond Shamrock.

3 "Dowicil" is a trademark of Dow Chemical Co.

4 "Mapico" is a trademark of Columbian Chemical Co.

5 Silica 1160 is available from Illinois Mineral Co.

6 "Attagel" is a trademark of Engelhard Corp. Mineral & Chemicals Division for refined attapulgus clay (hydrous magnesium silicate).

7 "Texanol" is a trademark of Eastman Chemical Products for 2,2,4-trimethyl-1,3-pentenediol monoisobutyrate.

8 QR-708 is a polyurethane type associative thickener available from Rohm and Haas Company.

The water-based paint had the following properties: pigment volume concentration = 41.38%; volume solids = 33.4%; pH = 9.5; and viscosity = 85-95 Krebs units.

Paints 1A, 1B, 1C, 1D and 1E were made by replacing the film forming, aqueous dispersion on a solids weight percentage basis with the aqueous dispersion of water insoluble, weak base-functionalized latex polymer of Example 9 at levels of 0, 1.0, 2.5, 5.0, and 10.0% by weight respectively. The effect of the material from Example 9 on the water spot resistance of paints 1A to 1E is shown in Table IV.

Table IV

| Paint | % Example 9 Polymer (w/w) | Water Spot Resistance (10 = Best, No Spots) | Relative Concentration of Extracted Surfactant |
|---|---|---|---|
| 1A | 0 | 4 | 1.00 |
| 1B | 1.0 | 6 | 0.69 |
| 1C | 2.5 | 8 | 0.46 |
| 1D | 5.0 | 9 | 0.36 |
| 1E | 10.0 | 9 | 0.34 |

Water spot resistance testing is done by drawing down paints with a 3 mil bird and letting the paints dry for 24 hours at 50% RH, 78°F (about 26°C). Drops of deionized water are then placed on the paint films and allowed to dry. Spotting is quantitatively rated from 1 to 10, with 10 showing no sign of spotting.

Extraction testing is done by preparing paint films as above, but casting of films is done on a release substrate such as polypropylene. After 24 hours of drying, films are removed from their substrate; placed in a petri dish and water at 20 times the weight of the film is added. The dish is covered and the films are allowed to soak for 4 hours at 25°C. The amount of surfactant in the water is analyzed spectrophotometrically and reported relative to the control with 0% Example 9 (Paint 1A).

## EXAMPLE 36

The blend stability results given in Table V show the effectiveness of a second stage in providing stable blends of weak base-functional polymer particles with film-forming anionic latexes. The use of nonfunctional as well as TBAEMA-functional second stages is shown.

Table V

| Blend Stability (Brookfield Viscosity 3/60) | | | | |
|---|---|---|---|---|
| Test Material[1] | Second Stage[2] | Initial | Week | Month |
| Example 24 | - | 140 | - | 140 |
| Example 15 | - | 150 | gell | - |
| Example 18 | - | 160 | - | 180 |
| Example 23 | - | 160 | gell | - |
| Example 31 | T | 170 | - | 200 |
| Example 33 | T | 140 | 1100 | gell |
| Example 3 | N | 170 | - | 260 |
| Example 9 | N | 180 | - | 200 |

1 All blends are 5% (solids on solids) test material blended with an anionic latex containing anionic surfactant. Blend total solids is 55%.
2 "N" = nonfunctional second stage; "T" = TBAEMA-functional second stage.

Example 37

The data presented in Table VI shows the effect of varying the proportion of monomer in the second stage to the monomer in the first stage on the water spot resistance of paints containing weak base-functional particles.

Table VI

| Test Material[1] | First Stage Second Stage[2] | Use Level %[3] | Water Spot Resistance |
|---|---|---|---|
| Example 3 | 9/1 | 5 | 9 |
| Example 9 | 19/1 | 5 | 9 |
| Example 11 | 1.01/2.99 | 5 | 3 |
| Example 11 | 1.01/2.99 | 19 | 3 |
| Example 12 | 1.01/1.99 | 5 | 3 |
| Example 12 | 1.01/1.99 | 14.3 | 3 |
| Example 13 | 1/1 | 5 | 4 |
| Example 13 | 1/1 | 9.5 | 4 |
| Example 14 | 2/1 | 5 | 8 |
| Example 14 | 2/1 | 7.1 | 9 |
| Example 24 | 0/1 | 5 | 3 |

[1] Paints are prepared by blending the test material with the paint of Example 35.
[2] Weight ratio of monomer in first stage to monomer in second stage.
[3] Use level is weight percent on total paint binder solids.

Example 38

The data given in Table VII demonstrate the effect of using amine-functional monomers of differing molecular weight and base strengths as measured by $pK_b$ (determined by half-neutralization point pH) on the water spot resistance of paints prepared according to Example 35.

Table VII

| Test Material[1] | Water Spot Resistance | $pK_b$ |
|---|---|---|
| Example 15 | 9 | 9.5 |
| Example 18 | 8 | 9.5 |
| Example 21 | 7 | 10.5 |
| Example 25 | 6 | 7 |
| None | 5 | --- |

[1] All test materials were used at 5% w/w on total binder solids.

Example 39

The data given in Table VIII compares the effect on water spot resistance of the weak base-functional particles of the invention having Tgs below and above ambient temperature. Water-spot resistance is improved only in the case of the non-film-forming material.

Table VIII

| Test Material[1] | Tg[2] | Room Temperature Film Former | Water Spot Resistance |
|---|---|---|---|
| Example 26 | 19 °C | Yes | 5 |
| Example 28 | 65 °C | No | 8 |
| None | | -- | 5 |

[1] All test materials were used in paints at 5% w/w on total binder solids.
[2] Glass transition temperature calculated from monomer composition.

Example 40

The data in Table XI demonstrate the utility of weak base-functional particles as the weight percentage of amine-functional ethylenically unsaturated monomer is varied over a wide range.

Table XI

| Test Material[1] | Water Spot Resistance |
|---|---|
| Example 18 | 8 |
| Example 19 | 8 |
| Example 27 | 6 |
| None | 5 |

[1] All materials used in paints at 5% w/w on total binder solids.

**Claims**

**1.** An aqueous coating composition comprising an anionic species-scavenging system including an aqueous dispersion of non-film forming, water-insoluble, weak base-functional synthetic latex polymer particles, the particles being polymerized from monomer including ethylenically unsaturated monomer having a weak base-functional group, and a volatile base adapted to maintain the pH of the aqueous coating composition above the $pK_a$ of the weak base-functional group prior to and during the application

of the composition.

**2.** An aqueous coating composition according to claim 1 wherein the weak base has a $pK_a$ from 4 to 7 measured at the half neutralization point.

**3.** An aqueous coating composition according to claim 1 or claim 2 wherein the weak base-functional polymer is prepared from monomer including amine-functional ethylenically unsaturated monomer, to an extent of from 5 to 75 percent by weight of the total monomer.

**4.** An aqueous coating composition according to claim 3 wherein the amine-functional monomer comprises from 20 to 60 percent by weight of the total monomer

**5.** An aqueous coating composition according to claim 3 or claim 4 wherein the amine-functional monomer is 2-(dimethylamino)ethyl methacrylate or 2-(t-butylamino)ethyl methacrylate.

**6.** An aqueous coating composition according to any preceding claim which is prepared by emulsion polymerization.

**7.** An aqueous coating composition according to any preceding claim wherein the weak base-functional polymer particles are polymerized in a single stage.

**8.** An aqueous coating composition according to any of claims 1 to 5 wherein the weak base-functional polymer latex particles are sequentially polymerized in at least stages, the weak base-functional monomer being polymerized in the first stage.

**9.** An aqueous coating composition according to claim 8 wherein the second stage is polymerized from monomer including styrene.

**10.** An aqueous coating composition according to claim 8 or claim 9 wherein the first stage is polymerized from monomer which includes 2-(dimethylamino)ethyl methacrylate and the second stage from monomer substantially free from monomer which includes 2-(dimethylamino)methacrylate.

**11.** An aqueous coating composition according to any of claims 8 to 10 wherein the second stage comprises from about 2.5 to 50 percent by weight of the weak base-functional latex polymer.

**12.** An aqueous coating composition according to claim 11 wherein the second stage comprises from about 5 to 25 percent by weight of the weak base-functional polymer.

**13.** An aqueous coating composition according to claim 12 wherein the non-film-forming polymer particles have an average glass transition temperature which is at least 10 Celsius degrees greater than the application temperature of the composition.

**14.** An aqueous coating composition according to any preceding claim including an aqueous dispersion of water-insoluble, anionically charged synthetic polymer latex particles and at least one anionic surfactant.

**15.** An aqueous coating composition according to any one of the preceding claims wherein the composition further includes film-forming polymer latex particles.

**16.** An aqueous coating composition according to claim 15 wherein the weight ratio of the weak base-functional polymer particles to the film-forming polymer particles is from 1% to 10%.

**Patentansprüche**

**1.** Wässerige Beschichtungszusammensetzung, umfassend ein Abfangsystem für Anionenarten, einschließlich einer wässerigen Dispersion von nicht-filmbildenden, wasserunlöslichen synthetischen Latex-Polymerteilchen mit schwach basischer Funktionalität, wobei die Teilchen aus einem Monomer, einschließlich eines ethylenischungesättigten Monomers mit schwach basischem funktionellem Rest,

polymerisiert sind, und eine flüchtige geeignete Base, wodurch der pH der wässerigen Beschichtungszusammensetzung oberhalb des $pK_a$-Wertes des schwach basischen funktionellen Restes vor und während der Anwendung der Zusammensetzung gehalten wird.

**2.** Wässerige Beschichtungszusammensetzung nach Anspruch 1, worin die schwache Base einen am Halbneutralisierungspunkt gemessenen $pK_a$-Wert von 4 bis 7 hat.

**3.** Wässerige Beschichtungszusammensetzung nach Anspruch 1 oder 2, worin das Polymer mit schwach basischer Funktionalität aus einem Monomer, einschließlich eines ethylenischungesättigten Monomers mit Amin-Funktionalität, bis zu einem Grad von 5 bis 75 Gew.-% des Gesamtmonomers hergestellt wird.

**4.** Wässerige Beschichtungszusammensetzung nach Anspruch 3, worin das Monomer mit Amin-Funktionalität 20 bis 60 Gew.-% des Gesamtmonomers umfaßt.

**5.** Wässerige Beschichtungszusammensetzung nach Anspruch 3 oder 4, worin das Monomer mit Amin-Funktionalität 2-(Dimethylamino)ethylmethacrylat oder 2-(t-Butylamino)ethylmethacrylat ist.

**6.** Wässerige Beschichtungszusammensetzung nach einem der vorhergehenden Ansprüche, die durch Emulsions-Polymerisation hergestellt wird.

**7.** Wässerige Beschichtungszusammensetzung nach einem der vorhergehenden Ansprüche, worin die Polymerteilchen mit schwach basischer Funktionalität in einer einzigen Stufe polymerisiert werden.

**8.** Wässerige Beschichtungszusammensetzung nach einem der Ansprüche 1 bis 5, worin die Latex-Polymerteilchen mit schwach basischer Funktionalität sequentiell in mindestens zwei Stufen polymerisiert werden, wobei das Monomer mit schwach basischer Funktionalität in der ersten Stufe polymerisiert wird.

**9.** Wässerige Beschichtungszusammensetzung nach Anspruch 8, worin die zweite Stufe aus einem Monomer, einschließlich Styrol, polymerisiert wird.

**10.** Wässerige Beschichtungszusammensetzung nach Anspruch 8 oder 9, worin die erste Stufe aus einem Monomer, das 2-(Dimethylamino)ethylmethacrylat umfaßt, und die zweite Stufe aus einem Monomer polymerisiert werden, das im wesentlichen frei von einem Monomer, einschließlich 2-(Dimethylamino)-methacrylat, ist.

**11.** Wässerige Beschichtungszusammensetzung nach einem der Ansprüche 8 bis 10, worin die zweite Stufe etwa 2,5 bis 50 Gew.-% des Latex-Polymers mit schwach basischer Funktionalität umfaßt.

**12.** Wässerige Beschichtungszusammensetzung nach Anspruch 11, worin die zweite Stufe etwa 5 bis 25 Gew.-% des Polymers mit schwach basischer Funktionalität umfaßt.

**13.** Wässerige Beschichtungszusammensetzung nach Anspruch 12, worin die nicht-filmbildenden Polymerteilchen eine durchschnittliche Glasumwandlungstemperatur haben, die mindestens 10 ° C höher als die Anwendungstemperatur der Zusammensetzung ist.

**14.** Wässerige Beschichtungszusammensetzung nach einem der vorhergehenden Ansprüche, einschließlich einer wässerigen Dispersion von wasserunlöslichen, synthetischen Latex-Polymerteilchen mit anionischer Ladung und mindestens eines anionischen Tensids.

**15.** Wässerige Beschichtungszusammensetzung nach einem der vorhergehenden Ansprüche, worin die Zusammensetzung ferner filmbildende Latex-Polymerteilchen umfaßt.

**16.** Wässerige Beschichtungszusammensetzung nach Anspruch 15, worin das Gewichtsverhältnis der Polymerteilchen mit schwach basischer Funktionalität zu den filmbildenden Polymerteilchen 1% bis 10% beträgt.

## Revendications

1. Composition de revêtement aqueuse comprenant un système d'enlevèment de matière anionique contenant une dispersion ou suspension aqueuse de particules de polymère de latex synthétique à fonction de base faible, non filmogène et insoluble dans l'eau, les particules étant polymérisées à partir de monomère, comprenant du monomère éthyléniquement insaturé ayant un groupe fonctionnel de base faible, et une base volatile susceptible de maintenir le pH de la composition de revêtement aqueuse au-dessus du $pk_a$ du groupe fonctionnel de base faible et pendant l'application de la composition.

2. Composition de revêtement aqueuse selon la revendication 1, dans laquelle la base faible a un $pk_a$ de 4 à 7 mesuré au point de demi-neutralisation.

3. Composition de revêtement aqueuse selon la revendication 1 ou 2, dans laquelle le polymère à fonction de base faible est préparé à partir de monomère comprenant du monomère à fonction amine éthyléniquement insaturé, à raison de 5 à 75 % en poids du monomère total.

4. Composition de revêtement aqueuse selon la revendication 3, dans laquelle le monomère à fonction amine constitue 20 à 60 en poids du monomère total.

5. Composition de revêtement aqueuse selon la revendication 3 ou 4, dans laquelle le monomère à fonction amine est le méthacrylate de 2-(diméthylamino) éthyle ou le méthacrylate de 2-(t-butylamino) éthyle.

6. Composition de revêtement aqueuse selon l'une quelconque des revendications précédentes, préparée par polymérisation en émulsion.

7. Composition de revêtement aqueuse selon l'une quelconque des revendications précédentes, dans laquelle les particules de polymère à fonction de base faible sont polymérisées en un seul stade.

8. Composition de revêtement aqueuse selon l'une quelconque des revendication 1 à 5, dans laquelle les particules de latex polymères à fonction de base faible sont polymérisées en séquence dans au moins deux stades, le monomère à fonction de base faible étant polymérisé au premier stade.

9. Composition de revêtement aqueuse selon la revendication 8, dans laquelle la polymérisation du second stade se fait à partir de monomère comprenant du styrène.

10. Composition de revêtement aqueuse selon la revendication 8 ou 9, dans laquelle la polymérisation du premier stade se fait à partir de monomère qui contient du méthacrylate de 2-(diméthylamino) éthyle et celle du second stade à partir de monomère essentiellement exempt de monomère qui contient du méthcyrlate de 2-(diméthylamino) éthyle.

11. Composition de revêtement aqueuse selon l'une quelconque des revendications 8 à 10, dans laquelle le second stade met en oeuvre environ 2,5 à 50 % en poids du polymère de latex à fonction de base faible.

12. Composition de revêtement aqueuse selon la revendication 11, dans laquelle le second stade met en oeuvre environ 5 à 25 % en poids du polymère à fonction de base faible.

13. Composition de revêtement aqueuse selon la revendication 12, dans laquelle les particules de polymère non filmogène ont un point de transition vitreuse moyen qui est d'au moins 10 ° C supérieur à la température d'application de la composition.

14. Composition de revêtement aqueuse selon l'une quelconque des revendictions précédentes contenant une dispersion aqueuse de particules de latex polymère synthétique insoluble dans l'eau chargées d'anions, et au moins un agent tensio-actif anionique.

15. Composition de revêtement aqueuse selon l'une quelconque des revendications précédentes, dans

laquelle la composition contient en outre des particules de latex polymère filmogène.

**16.** Composition de revêtement aqueuse selon la revendication 15, dans laquelle le rapport pondéral des particules de polymères à fonction de base faible aux particules de polymère filmogène est de 1 à 10 %.